# DEMANDE DE BREVET EUROPEEN

(11) **EP 2 775 164 A1**
(43) Date de publication de la demande: **10.09.2014**
(21) Numéro de dépôt: 13158060.7
(22) Date de dépôt: 06.03.2013
(51) Int. Cl.: F16F 9/58

(54) **Vérin auto-bloquant pour ouvrant de véhicule automobile**

(71) Demandeur: COMPAGNIE PLASTIC OMNIUM, 69007 Lyon (FR)
(72) Inventeur: La désignation de l'inventeur n'a pas encore été déposée
(74) Mandataire: Remy, Vincent Noel Paul

(57) **Abrégé**

L'invention concerne un vérin (1) pour élément mobile de carrosserie de véhicule automobile, apte à contenir un fluide, comprenant une chambre (2) et un piston (3). Le piston est constitué d'une tige (32) et d'une tête (31). La tête (31) du piston présente une surface (310) opposée à la tige qui se trouve en regard d'une surface (21) du fond de la chambre. Le fond de la chambre du vérin comporte au moins une butée (4). La butée présente une surface de contact (41) imperméable au fluide, en regard d'au moins une partie de l'une au moins des surface (21 ; 310). La surface de contact de la butée est agencée de manière à chasser le fluide se trouvant entre la surface de contact (41) et la partie de l'une au moins des surfaces (21 ; 310).

## Description

La présente invention concerne le domaine des ouvrants de véhicules automobiles.

On connaît déjà les hayons de véhicules automobiles qui comportent des vérins à gaz ou hydrauliques.

Ces vérins aident à l'ouverture du hayon en soulageant l'utilisateur souhaitant ouvrir le hayon du poids de ce dernier.

L'inventeur à la base de la présente demande a découvert que, dans les hayons en matière thermoplastique, c'est-à-dire dont au moins un des panneaux est en matière thermoplastique, la poussée des vérins qui s'exerce en permanence sur le hayon, y compris lorsqu'il est fermé, finit à la longue par provoquer des déformations indésirables, notamment lorsque le hayon est exposé pendant une longue durée sous un soleil puissant.

L'invention a pour but de remédier à ces inconvénients.

L'invention a notamment pour but de moduler l'effort de poussée du vérin, notamment dans sa position de fin de course.

L'invention concerne un vérin pour élément mobile de carrosserie de véhicule automobile, apte à contenir un fluide, comprenant une chambre et un piston constitué d'une tige et d'une tête, la tête présentant une surface opposée à la tige et une surface en contact avec la tige, lesdites surfaces étant chacune en regard d'une surface d'un fond de la chambre, **caractérisé en ce que** le vérin comprend au moins une butée en regard d'au moins une des surfaces, la butée présentant au moins une surface de contact imperméable au fluide, la surface de contact étant en regard d'une partie de l'une au moins des surfaces et étant agencée pour s'appliquer contre la partie de l'une au moins des surfaces de manière à chasser le fluide se trouvant entre la surface de contact et ladite partie.

Dans un mode de réalisation particulier, une surface d'un fond de la chambre comporte une butée présentant une surface de contact imperméable au fluide agencée pour s'appliquer contre une partie d'une surface de la tête de piston, de manière à chasser le fluide se trouvant entre ladite surface de la tête de piston et ladite surface de contact de la butée.

Dans un autre mode de réalisation, une surface de la tête comporte une butée présentant une surface de contact imperméable au fluide agencée pour s'appliquer contre une partie d'une surface d'un fond de la chambre, de manière à chasser le fluide se trouvant entre ladite surface du fond de la chambre et ladite surface de contact de la butée.

Dans le vérin selon l'invention, une partie de la surface du fond de la chambre se trouve neutralisée par une surface imperméable au(x) fluide(s) lorsque le piston arrive en fin de course, ce qui provoque une annulation, ou une réduction significative, ou une inversion de la poussée du vérin.

Dans un premier cas où la butée se trouve du côté opposé à la tige de piston, lorsque ladite butée est configurée de manière que la poussée du vérin est inversée alors que le piston est enfoncé en fin de course, le vérin a tendance à rester enfoncé sous l'effet de cette poussée inversée et il faut exercer une traction pour le décoller de sa position enfoncée. Une fois décollé, le piston subit à nouveau la poussée tendant à le faire sortir du vérin. On obtient donc un point dur sur la trajectoire du piston, puisqu'il faut vaincre une force pour le remettre en mouvement.

Inversement, dans un second cas où la butée se trouve du côté de la tige de piston, la poussée du vérin est toujours augmentée lorsque le piston est sorti en fin de course, de sorte que le vérin a tendance à rester sorti sous l'effet de la poussée augmentée qu'il subit, même si on exerce sur lui une poussée inférieure à cette poussée augmentée. On obtient donc aussi un point dur du fait qu'il faut vaincre une résistance accrue du vérin en fin de course pour le remettre en mouvement.

Dans l'invention, on définit par « fond de la chambre » la partie de la chambre du vérin qui entre en contact avec
- soit la surface de la tête de piston opposée à la tige lorsque le piston est rentré en position de fin de course, ou en position où le piston est essentiellement enfoncé,
- soit la surface de la tête de piston en contact avec la tige lorsque le piston est sorti en position de fin de course, ou en position où le piston est essentiellement sorti.

Dans l'invention, les termes « une partie de l'une au moins des surfaces » doivent être interprétés comme signifiant tout ou partie desdites surfaces. Aussi, la surface de contact de la butée est en regard soit d'une partie, soit de la totalité, de la surface de l'une au moins des surfaces du fond de la chambre, de la surface de la tête de piston opposé à la tige ou de la surface de la tête de piston en contact avec la tige.

Grâce à l'invention, lorsque le vérin se trouve dans la position dans laquelle sa tête de piston est en contact avec la surface imperméable, l'action du vérin sur l'ouvrant est réduite, voire annulée.

Selon un mode de réalisation, le fluide compris dans la chambre du vérin selon l'invention est un gaz ou un liquide, ou encore un mélange de ceux-ci. Les fluides appropriés dans le cadre du vérin de l'invention sont des gaz tels que l'air, le CO₂, l'azote, l'oxygène, ou des liquides plus ou moins visqueux, notamment l'eau, des huiles, etc. Par « mélange de ceux-ci », on entend dans l'invention des mélanges de gaz, des mélanges de liquides ou encore des mélanges de gaz et de liquides, dans des proportions appropriées déterminées aisément par l'homme du métier. L'air sera considéré comme un gaz ou un mélange de gaz simples.

Selon un autre mode de réalisation avantageux, la surface de contact de la butée est molle et déformable, et présente une dureté inférieure ou égale à 90 shore A.

Du fait de sa déformabilité, la surface de contact de la butée est susceptible de supprimer, ou réduire significativement, la pression exercée par le fluide. Dans un aspect de l'invention, la déformabilité permet également d'évacuer le fluide se trouvant entre la surface de contact de la butée et la surface de la tête de piston opposée à la tige, par exemple par effet ventouse. Une mise en contact entre la butée et la surface de la tête de piston ou du fond de la chambre, sans créer d'effet ventouse, est tout aussi avantageuse.

Avantageusement, la surface de contact de la butée est constituée par une couche de matériau présentant des propriétés de déformabilité élastique, le matériau étant notamment en caoutchouc, en élastomère ou en polyamide. Des matériaux, notamment composites, moussés alvéolaires peuvent également être avantageux.

Dans l'invention, on définit la surface de contact de la butée par le fait qu'elle est constituée d'une couche de matériau. Cela signifie que la butée peut être revêtue d'un matériau possédant les propriétés susmentionnées (imperméable au fluide, déformable et molle), qu'il s'agisse d'un revêtement d'une ou plusieurs couches, ou que la butée est intégralement constituée dudit matériau.

Le matériau de la butée est imperméable au fluide, ce qui signifie que par la nature du matériau, le fluide contenu dans la chambre du vérin ne peut pénétrer ou imprégner le matériau.

Dans le cas de matériaux composites, présentant des cavités du fait d'un moussage, d'un gonflage ou d'une polymérisation, les cavités du matériau ne sont pas communicantes, de telle sorte que seules les cavités externes du matériau, c'est-à-dire les cavités exposées vers l'extérieur du matériau, peuvent contenir le fluide de la chambre.

Selon un autre mode de réalisation compatible avec les précédents, la surface de contact de la butée est de taille équivalente à celle de la surface de la tête de piston ou de la surface du fond de la chambre. En d'autres termes, l'aire de la surface de contact est environ égale à l'aire de la surface de la tête de piston opposée à la tige. Par « environ égale », on entend dans l'invention que les aires sont égales avec une marge d'erreur de plus ou moins 10%, notamment de plus ou moins 5%. En d'autres termes, et à titre d'exemple, si l'aire de la surface de la tête de piston est de 5 cm², l'air de la surface de contact pourra varier de 4,9 à 5,1 cm², en particulier l'air de la surface de contact pourra varier de 4,95 à 5,05 cm².

Selon un mode de réalisation compatible avec les précédents, la surface de contact de la butée peut contenir des moyens permettant de chasser le fluide emprisonné entre ladite surface de contact et la surface de la tête opposée à la tige au moment où le piston arrive en fin de course, sous forme de canaux, de rigoles, de microsillons, ou de tout autre moyens.

Avantageusement, la butée est de forme sensiblement identique ou adaptée à la forme de la chambre de piston, la chambre étant par exemple de forme cylindrique de section circulaire, parallélépipédique ou elliptique. La butée peut être positionnée au centre de la surface du fond de la chambre ou de la tête de piston. La butée peut être pleine ou comprendre au moins un évidement, notamment un évidement au centre de la butée, tel qu'un anneau par exemple de section circulaire, parallélépipédique ou elliptique.

Selon un autre mode de réalisation compatible avec les précédents, la tête du piston coulisse avec jeu dans la chambre du vérin, permettant le passage du fluide de part et d'autre de la tête de piston, ce passage étant ralenti du fait de l'étroitesse du jeu de manière à fournir une fonction d'amortisseur.

L'invention concerne par ailleurs un élément mobile de carrosserie de véhicule automobile équipé d'au moins un vérin tel que défini précédemment. L'élément mobile, sans que cela soit limitatif, peut être choisi parmi des ouvrants, tels qu'un toit ouvrant, un hayon arrière, un capot ou encore une porte papillon, ledit ouvrant étant avantageusement en matière plastique. Grâce à l'invention, lorsque que l'ouvrant est en position fermée, le vérin se trouve dans la position dans laquelle sa tête de piston s'appuie contre la surface de contact et l'action du vérin sur l'ouvrant est réduite, voire annulée.

Avantageusement, l'élément mobile de carrosserie peut être piloté ou assisté par un système à vérin selon l'invention. L'élément mobile peut être un élément aérodynamique (tel qu'un spoiler, un volet ...). Dans ce mode de réalisation, le fait d'obtenir un point dur de blocage lorsque le vérin est en position ouverte, dans une position de fin de course, est avantageux. En d'autres termes, lorsque le piston est sorti en fin de course, la pression exercée sur la surface de la tête de piston opposée à la tige est telle que le vérin à tendance à rester ouvert. Le vérin est bloqué dans cette position tant qu'une force suffisante n'est pas appliquée au piston pour contrebalancer la poussée sur la tête de piston opposée à la tige.

L'invention a également pour objet un véhicule automobile comprenant au moins un élément mobile tel que défini précédemment.

L'invention concerne également l'utilisation d'un vérin tel que défini ci-dessus en tant que vérin d'un élément mobile d'un véhicule automobile, l'ouvrant étant notamment en matière plastique. Avantageusement, l'invention concerne l'utilisation du vérin susmentionnée en tant que vérin d'un hayon arrière, notamment en matière plastique, de véhicule automobile.

L'invention sera mieux comprise à la lecture des figures annexées, qui sont fournies à titre d'exemples et ne présentent aucun caractère limitatif, dans lesquelles :
La figure 1 représente le vérin dans une position dans laquelle la tige de piston est proche de la position de fin de course.
La figure 2 représente le même vérin dans la position de fin de course de la tige de piston.
La figure 3 est une vue de détail de la tête de piston à une échelle déformée concernant la grande dimension du vérin.
Les figures 4A à C et 5A à C représentent le vérin dans une position dans laquelle la tige de piston est proche de la position de fin de course, et où la butée est respectivement positionnée sur le fond de la chambre (A), entre le fond et la tête de piston (B) et sur la tête de piston (C).
Les figures 6A, 6B, 7A et 7B représentent des modes de réalisation avantageux de piston et de chambre, adaptés pour coopérer avec des butées en anneau.

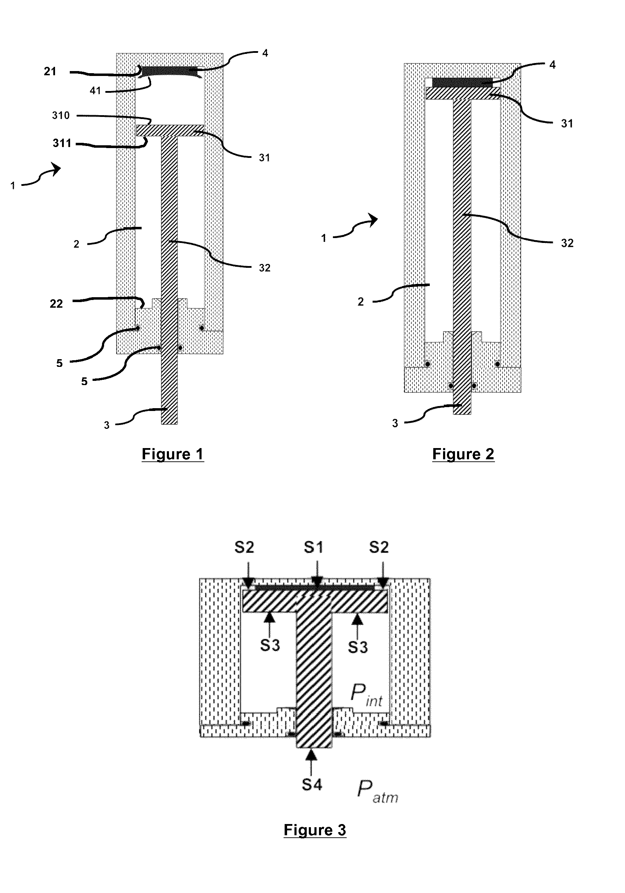

On se réfère maintenant à la figure 1. Le vérin à fluide 1, représenté à la figure 1 comprend un piston 3 et une chambre 2 ayant deux fonds opposés 21 et 22. On considère dans la suite uniquement le fond 21. Le piston 3 est constitué d'une tête 31 et d'une tige 32. Le fluide contenu dans la chambre 2 est isolé de l'extérieur du vérin 1 par des joints 5. Les joints 5 assurent l'étanchéité de la chambre 2. Dans cet exemple, le fluide est de l'air.

Lorsque le piston est actionné, la tête 31 coulisse dans la chambre 2 entre une position où la tête est la plus éloignée du fond 21 de la chambre et une position où la tête entre en contact avec le fond 21 de la chambre 2.

Le fond 21 de la chambre 2 comporte une butée 4 réalisée en matériau imperméable à l'air, tel que le caoutchouc, un élastomère, de la polyamide, ou un matériau, notamment composite, moussé alvéolaire. La butée 4 est solidaire du fond 21 et ne peut donc s'en détacher.

En figure 2, le vérin 1 est représenté dans une position où le piston 3 est entièrement rentré et est en contact avec la butée 4. Le piston 3 est en fin de course.

La butée 4, ou du moins la surface de contact 41 de celle-ci, est imperméable à l'air et déformable, ce qui a pour effet de chasser l'air qui se trouve entre la surface de contact 41 et la surface 310 de la tête de piston opposée à la tige. La pression interne qui s'exerce sur la tête du piston, et qui exerce un effort de sortie, est alors réduite ou annulée, voire inversée, en fonction des différentes surfaces mises en jeu, comme cela sera expliqué plus avant.

Avantageusement, comme représenté à la figure 2, la surface de contact 41 et la surface 310 de la tête du piston opposée à la tige sont plaquées l'une avec l'autre de manière quasi parfaite. En d'autres termes, lors de ce plaquage, les deux surfaces (41 et 310) ne sont pas séparées par l'air contenu dans la chambre.

A la figure 3, on représente un agrandissement, à une échelle déformée, du fond de la chambre 2 du vérin 1, lorsque le piston 3 est en fin de course et que la surface de contact 41 de la butée 4 est en contact avec la surface 310 de la tête 31 du piston opposée à la tige 32.

La surface 310 de la tête opposée à la tige est représentée par les surfaces S1+S2, où la surface S1 correspond à la surface de la tête du piston opposée à la tige qui entre en contact avec la surface de contact 41 de la butée 4, et S2 représente la surface de la tête de piston opposée à la tige qui n'entre pas en contact avec la surface de contact 41 de la butée 4.

La surface de la tête de piston ou est positionnée de manière directe ou indirecte la tige, qui est donc la surface opposée à la surface 310, est représentée par la surface S3. La surface S4 correspond à la surface de la tige elle-même.

On notera donc que S1+S2 = S3+S4.

La pression interne du vérin, représentée par Pᵢₙₜ, s'applique alors sur les deux faces de la tête (3) du piston, à savoir S1+S2 et S3. La pression atmosphérique (Pₐₜₘ) s'applique sur la surface de la tige (S4).

L'effort de sortie (F) sur la tige est créé par la différence de pression s'appliquant sur ces surfaces, et peut être représenté par la formule : F=Pᵢₙₜx(S1+S2) - PᵢₙₜxS3 - PₐₜₘxS4.

Lorsque la tige est en position entièrement rentrée, et en fin de course, le piston vient en contact avec la butée déformable, ce qui a pour effet de réduire la surface sur laquelle s'applique la pression interne du vérin. La réduction de cette surface permet de diminuer, annuler ou inverser l'effort de sortie de la tige.

Dans ce cas où la tige est en position rentrée, c'est-à-dire lorsque la surface 41 et la surface 301 sont en contact, la pression exercée sur la surface S1 est nulle. La formule de l'effort de poussée devient : F=PᵢₙₜxS2 - PᵢₙₜxS3 - PₐₜₘxS4.

L'effort est maximum dans le cas où le diamètre de la surface de contact de la butée est égal au diamètre du piston. Dans ce cas, la pression exercée sur la surface S1+S2 est nulle et la formule devient : F= - PᵢₙₜxS3 - PₐₜₘxS4.

L'effort de maintien, la raideur de la butée élastique et la pression interne seront définis par le dimensionnement des pièces, et seront adaptés en fonction du dispositif à équiper, et notamment du matériau de celui-ci.

Des rotules aux deux extrémités du vérin peuvent être prévues afin de s'adapter aux dispersions géométriques de fabrication de pièces.

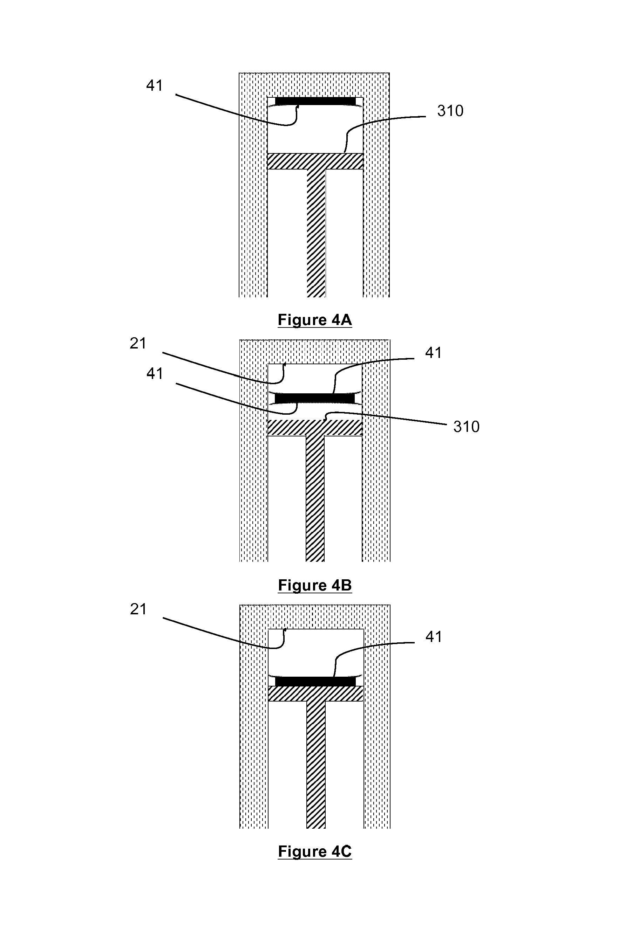

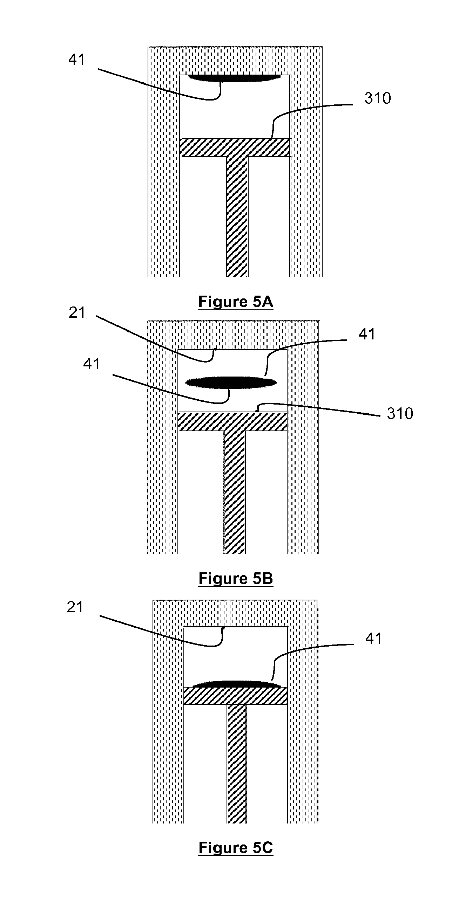

Les figures 4A à C et 5A à C montrent des modes de réalisation avantageux de l'invention. Les figures 4 illustrent des positionnements possibles d'une butée 4 présentant une surface de contact 41 en forme de ventouse. La butée peut être soit fixée au fond 21 (figure 4A), soit flottante (figure 4B), soit fixée à la surface 310 du piston 3 (figure 4C). Les figures 5, quant à elles, illustrent de la même manière différents positionnements possibles d'une butée 4 de forme elliptique.

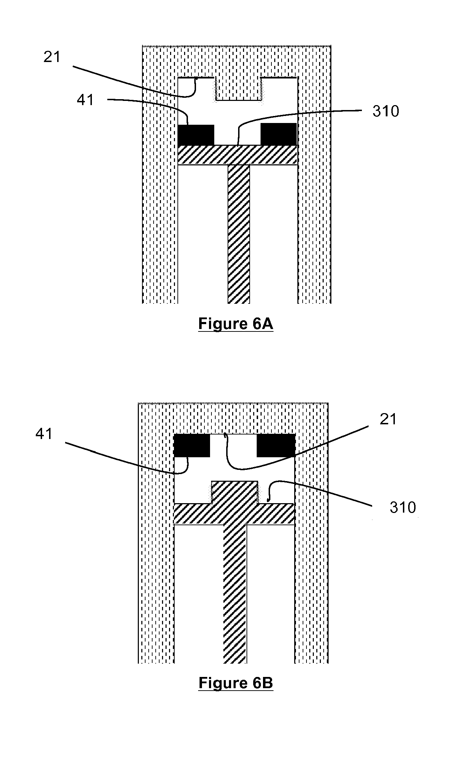

Les figures 6A et 6B illustrent des modes de réalisation particuliers où la butée est de forme annulaire. Dans ces modes de réalisations, le fond de la chambre, ou la tête de piston, présentent un bossage coopérant avec l'évidement de la butée en anneau.

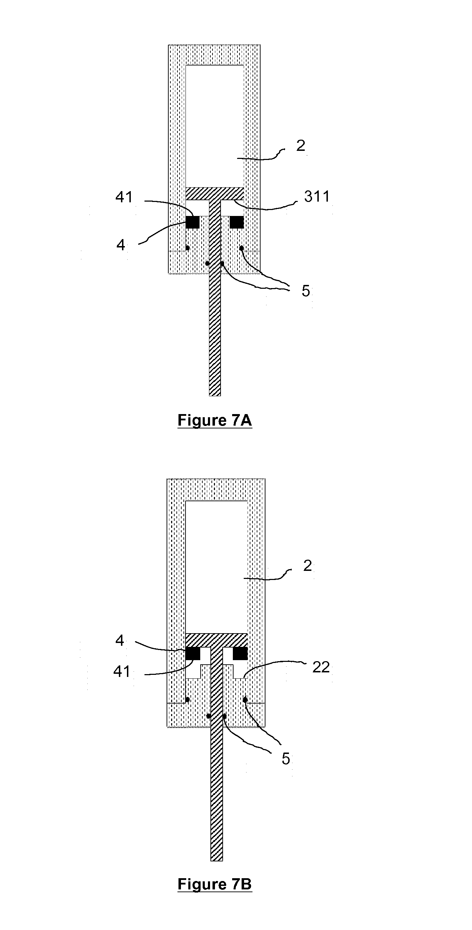

En figure 7A, le vérin 1 est représenté dans une position où le piston 3 est presque entièrement sorti et presque en contact avec la butée 4 positionnée sur le fond 22 de la chambre 2.

En figure 7B, le vérin 1 est représenté dans une position où le piston 3 est presque entièrement sorti et presque en contact avec la butée 4 positionnée sur le sur la surface 311 de la tête de piston en contact avec la tige.

Les butées 4 en anneau sont particulièrement avantageuses lorsque l'effet recherché est d'augmenter la poussée lorsque la tige est en position sortie, c'est-à-dire lorsque la surface de la tête de piston en contact avec la tige est entre en contact avec le fond 22 de la chambre.

L'invention n'est pas limitée au mode de réalisation présenté et d'autres modes de réalisation apparaîtront clairement à l'homme du métier.

## Revendications

1. Vérin (1) pour élément mobile de carrosserie de véhicule automobile, apte à contenir un fluide, comprenant une chambre (2) et un piston (3) constitué d'une tige (32) et d'une tête (31), la tête (31) présentant une surface (310) opposée à la tige et une surface (311) en contact avec la tige, lesdites surfaces (310, 311) étant chacune en regard d'une surface (21, 22) d'un fond de la chambre,
**caractérisé en ce que** le vérin comprend au moins une butée (4) en regard d'au moins une des surfaces (21 ; 22 ; 310 ; 311), la butée (4) présentant au moins une surface de contact (41) imperméable au fluide, la surface de contact (41) étant en regard d'une partie de l'une au moins des surfaces (21 ; 22 ; 310 ; 311) et étant agencée pour s'appliquer contre la partie de l'une au moins des surfaces (21 ; 22 ; 310 ; 311) de manière à chasser le fluide se trouvant entre la surface de contact (41) et ladite partie.

2. Vérin selon la revendication 1, dans lequel une surface (21 ; 22) d'un fond de la chambre comporte une butée (4) présentant une surface de contact (41) imperméable au fluide agencée pour s'appliquer contre une partie d'une surface (310 ; 311) de la tête de piston, de manière à chasser le fluide se trouvant entre ladite surface de la tête de piston et ladite surface de contact de la butée.

3. Vérin selon la revendication 1, dans lequel une surface (310 ; 311) de la tête (4) comporte une butée (4) présentant une surface de contact (41) imperméable au fluide agencée pour s'appliquer contre une partie d'une surface (21 ; 22) d'un fond de la chambre, de manière à chasser le fluide se trouvant entre ladite surface du fond de la chambre et ladite surface de contact de la butée.

4. Vérin selon l'une quelconque des revendications précédentes, dans lequel la surface de contact a une dureté inférieure ou égale à 90 shore A.

5. Vérin selon l'une quelconque des revendications 1 à 4, où la surface de contact de la butée est constituée par une couche de matériau en caoutchouc, en élastomère ou en polyamide, ou en matériau moussé alvéolaire.

6. Vérin selon l'une quelconque des revendications 1 à 5, dans lequel l'aire de la surface de contact est environ égale à l'aire de la surface de la tête de piston opposée à la tige.

7. Elément mobile de carrosserie de véhicule automobile équipé d'un vérin selon l'une quelconque des revendications 1 à 6.

8. Elément mobile selon la revendication 7, choisi parmi des ouvrants tels qu'un toit ouvrant, un hayon arrière, un capot, une porte papillon, un spoiler ou un volet.

9. Véhicule automobile comportant au moins un élément mobile selon l'une quelconque des revendications 7 à 8.

10. Utilisation d'un vérin selon l'une quelconque des revendications 1 à 6 en tant que vérin d'un élément mobile de carrosserie de véhicule automobile.
